# EUROPÄISCHE PATENTSCHRIFT

(11) **EP 1 705 385 B1**
(45) Veröffentlichungstag und Bekanntmachung des Hinweises auf die Patenterteilung: **22.10.2008**
(21) Anmeldenummer: 06110783.5
(22) Anmeldetag: 07.03.2006
(51) Int. Cl.: F16B 5/04, B21D 39/03

(54) **Durchzugsanordnung und Verfahren dazu**
Rim hole and method of manufacturing the same
Passage et procédé de fabrication

(30) Priorität: 22.03.2005 DE 102005000023
(43) Veröffentlichungstag der Anmeldung: 27.09.2006
(73) Patentinhaber: HILTI Aktiengesellschaft, 9494 Schaan (LI)
(72) Erfinder: Herb, Armin, 86974, Apfeldorf (DE)
(74) Vertreter: Wildi, Roland

(56) Entgegenhaltungen:
- EP-A- 0 579 396
- WO-A-01/94797
- DE-C1- 19 810 367
- FR-A- 2 426 506
- FR-A- 2 752 886

## Beschreibung

### Technisches Gebiet

Die Erfindung betrifft eine Anordnung eines Stapels aus zumindest zwei plattenförmigen Werkstücken, die durch einen Durchzug miteinander verbunden sind, der im Oberbegriff des Patentanspruchs 1 genannten Art, sowie ein Verfahren zur Herstellung des Durchzugs durch einen solchen Stapel, der im Oberbegriff des Patentanspruchs 5 genannten Art.

### Stand der Technik

Aus der DE 86 32 788 U1 ist eine Anordnung von drei aufeinanderliegenden, vorgeformten Flachteilen bekannt, die mittels eines Durchzugs miteinander verbunden sind. Die Flachteile werden vor dem Vernieten jeweils einzeln in einem separaten Arbeitsschritt mit Bohrungen versehen, die beim Aufeinanderlegen örtlich übereinstimmen, wobei die Bohrung in dem aussenliegenden, dem Durchzugstempel zugewandten Flachteil kleiner als die Bohrungen der übrigen Flachteile ausgebildet ist. Mittels des Durchzugsstempels wird Material des, dem Durchzugstempel zugewandten Flachteils durch die Bohrungen der anderen, dem Durchzugstempel abgewandten Flachteile durchgezogen und die freien Ränder des Durchzugs anschliessend nach aussen umgebördelt.

Nachteilig an der bekannten Lösung ist, dass die Flachteile in einem separaten Arbeitsschritt jeweils einzeln an einer präzise vorbestimmten Stelle vorgebohrt werden müssen. Dabei muss schon vorgängig bestimmt werden, welches Flachteil zur Bildung des Durchzugs verwendet wird. Dieses Verfahren ist umständlich und fehleranfällig.

Aus der DE 198 10 367 C1 ist ein Verfahren zum Herstellen eines Durchzugs durch einen Stapel aus zumindest zwei plattenförmigen Werkstücken bekannt, bei dem vor dem Ausbilden des Durchbruchs eine Durchgangsöffnung durch den Stapel erzeugt wird, deren Querschnittsfläche höchstens der Querschnittsfläche der Öffnung des Durchzugs entspricht. Anschliessend wird ein Durchzugsstempel im Wesentlichen senkrecht durch den Stapel geführt, wobei Material des einen, dem Durchzugsstempel zugewandten Werkstückes durch eine Öffnung des anderen, dem Durchzugsstempel abgewandten Werkstückes gezogen wird, wobei die Innenkontur der Öffnung im Wesentlichen der Aussenkontur des Durchzugs entspricht. In einer einzigen Zustellbewegung des Durchzugsstempels wird sowohl der Durchzug als auch die Öffnung an dem anderen, dem Durchzugsstempel abgewandten Werkstück gebildet, indem das, dem Durchzugsstempel abgewandte Werkstück von einer Matrize derart abgestützt wird, dass beim Einführen des Durchzugsstempels aus dem, dem Durchzugsstempel abgewandten Werkstück ein Materialstück ausgebrochen wird, dessen Aussenkontur im Wesentlichen der Aussenkontur des Durchzugs entspricht. Der freie Rand des Durchzugs wird nach aussen umgebördelt.

Dieses Verfahren zur Herstellung einer Durchzugsvernietung hat sich bewährt, stösst aber bei Materialdicken von über 3 mm an seine Grenzen. Zudem lassen sich Zug- und Querbelastungen bei Durchzügen, die nach diesem Verfahren hergestellt sind, nicht mehr steigern.

Die EP 0 579 396 A1 zeigt eine Anordnung eines Stapels aus zumindest zwei plattenförmigen Werkstücken, die durch einen Durchzug miteinander verbunden sind, wobei Material des ersten Werkstücks durch eine Durchgangsöffnung des zumindest einen anderen Werkstücks durchgezogen ist. Der Rand der Durchgangsöffnung in dem zumindest einen anderen Werkstück verläuft senkrecht zur Plattenebene des zumindest einen anderen Werkstücks. Der freie Rand des durchgezogenen, rückverformten Materials des ersten Werkstücks verengt sich konisch in Richtung des ersten Werkstücks.

Die FR 2 752 886 A1 offenbart eine Anordnung eines Stapels aus zwei Blechen, die durch einen Durchzug miteinander verbunden sind, wobei Material des ersten Blechs durch eine Durchgangsöffnung des anderen Blechs durchgezogen ist. Der Rand der Durchgangsöffnung in dem anderen Blech verengt sich konisch in Richtung des ersten Blechs. Zum Herstellen des Durchzugs durch den Stapel wird vorgängig in einem der Bleche eine Durchgangsöffnung mit einem umlaufenden Kragen erstellt und in einem separaten Bearbeitungsvorgang im anderen Blech eine sich erweiternde Durchgangsöffnung mit einem Durchmesser erstellt wird, der minimal grösser als der Aussendurchmesser des Kragens ist. Anschliessend werden die Bleche übereinander gelegt und dann der Kragen mit einem Stempel umgeformt.

Die WO 01/94797 A1 offenbart ebenfalls eine Anordnung eines Stapels aus zwei Blechen, die durch einen Durchzug miteinander verbunden sind. Der Rand der Durchgangsöffnung in dem anderen Blech kann konisch verengend in Richtung des ersten Werkstücks sowie zusätzlich umlaufend stufenförmig verlaufend ausgebildet sein. Zum Herstellen des Durchzugs durch den Stapel werden in zwei separaten Bearbeitungsvorgängen jeweils die Durchführöffnungen in den Blechen erstellt und anschliessend wird mit einem Stempel Material des ersten Blechs durchgezogen.

### Darstellung der Erfindung

Aufgabe der Erfindung ist es, eine Anordnung von zumindest zwei plattenförmigen Werkstücken, die durch einen mittels eines Durchzugstempels erstellten Durchzug miteinander verbunden sind, sowie ein Verfahren zum Herstellen eines Durchzugs zu schaffen, das auch das Verbinden von Werkstücken unabhängig von der Materialdicke sowie die Übertragung von hohen Lasten über die erstellte Vernietung ermöglicht.

Die Aufgabe ist durch die Merkmale der unabhängigen Ansprüche gelöst. Vorteilhafte Weiterbildungen sind in den Unteransprüchen dargelegt.

Gemäss der Erfindung weist der Rand der Durchgangsöffnung in dem zumindest einen anderen Werkstück einzelne Vertiefungen auf, in denen ein grösserer Anteil von durchgezogenem Material des, dem Durchzugsstempel zugewandten Werkstückes aufgenommen werden kann, womit die Übertragung von Querlasten sowie die Schubsteifigkeit der erstellten Vernietung verbessert wird. Alternativ oder in Ergänzung zu den Vertiefungen sind am Rand der Durchgangsöffnung in dem zumindest einen anderen Werkstück einzelne Erhebungen vorgesehen, zwischen denen ein Anteil von durchgezogenem Material des, dem Durchzugsstempel zugewandten Werkstückes aufgenommen werden kann.

Beim Herausbrechen beziehungsweise beim Durchreissen eines Materialstückes aus dem zumindest einen anderen Werkstück bildet sich eine, den Querschnitt der Durchgangsöffnung in dem zumindest einen anderen Werkstück verengende Fase aus, die in Kombination mit der im Wesentlichen konischen Ausbildung des Randes der Durchgangsöffnung in dem zumindest einen anderen Werkstück eine bereichsweise Hinterformung des, von dem Durchzugstempel durchgezogenen Materials schafft. Dabei wird einerseits eine einwandfreie Vernietung und somit eine sichere Verbindung der beiden Werkstücke miteinander geschaffen sowie andererseits die Übertragbarkeit von Lasten über diese Verbindung verbessert.

Weiter wird durch den konischen Verlauf des Randes der Durchgangsöffnung in dem zumindest einen anderen Werkstück ein ausreichender Freiraum geschaffen, in welchem das durchgezogene Material aufgenommen werden kann und die Ausbildung einer oberflächenbündigen Vernietung beziehungsweise auch eine zu der Oberfläche zurückversetzte Vernietung ermöglicht ist.

Bevorzugt weist der Rand der Durchgangsöffnung in dem zumindest einen anderen Werkstück eine Bruchzone und eine Prägezone auf. Im Bereich der Prägezone ist das Material verfestigt und ermöglicht die Übertragung grosser Lasten. Vorteilhafterweise ist die Bruchzone umlaufend des Randes der Durchgangsöffnung in dem zumindest einen, dem Durchzugsstempel abgewandten Werkstück angeordnet, so dass eine gezielte Formgebung der Vernietung gewährleistet ist.

Vorzugsweise ist der Rand der Durchgangsöffnung in dem zumindest einen anderen Werkstück stufenförmig verlaufend ausgebildet, womit eine Verfestigung des Randbereiches erreicht und die Übertragbarkeit von Lasten zusätzlich verbessert wird.

Gemäss der Erfindung umfasst das Verfahren zum Herstellen eines Durchzugs durch einen Stapel aus zumindest zwei plattenförmigen Werkstücken folgende Verfahrensschritte:
Prägen einer Bruchzone in dem, dem Durchzugsstempel abgewandten Werkstück auf der, dem Durchzugsstempel abgewandten Seite des Werkstücks,
Erzeugen von Durchgangsöffnungen durch den Stapel mittels eines Lochungswerkzeugs in einer einzigen Zustellbewegung, wobei die Querschnittsfläche der Durchgangsöffnung in dem, dem Durchzugsstempel zugewandten Werkstück kleiner als die Querschnittsfläche des Durchzugs ist, und die Querschnittsfläche der Durchgangsöffnung in dem, dem Durchzugsstempel abgewandten Werkstück grösser als die Querschnittsfläche des Durchzugs ist, und
Erstellen des Durchzugs mittels eines Durchzugsstempels, der senkrecht durch den Stapel geführt wird, wobei Material des einen, dem Durchzugsstempel zugewandten Werkstückes durch die Durchgangsöffnung des zumindest einen, dem Durchzugsstempel abgewandten Werkstückes durchgezogen wird.

Durch die Prägung der Bruchzone wird ein definierter Abrissquerschnitt erzeugt und eine gezielte Formgebung der zu erstellenden Vernietung ermöglicht. Somit kann der Durchzug neben den bekannten Formen, wie ein Rundloch oder Langloch, auch komplexere Geometrien, wie beispielsweise ein Rechteckloch, ein Schlüsselloch oder ein Loch mit einer mehrpolygonalen Aussenkontur aufweisen. Mit dem erfindungsgemässen Verfahren können Werkstücke unabhängig von deren Materialdicke oder Materialart in einfacher Weise miteinander vernietet werden.

Das Lochungswerkzeug ist beispielsweise ein Locheisen, welches die Durchgangsöffnung in dem, dem Durchzugstempel zugewandten Werkstück ausstanzt und bei der Weiterführung der Zustellbewegung des Locheisens ein Materialstück aus dem, dem Durchzugstempel abgewandten Werkstück herausbricht beziehungsweise dieses Werkstück durchreisst. Beim anschliessenden Erstellen des Durchzugs mittels des Durchzugstempels wird kein weiteres Material aus dem, dem Durchzugstempel abgewandten Werkstück herausgebrochen.

Neben der Bruchzone wird beim Prägen eine Prägezone geschaffen, so dass der Rand der Durchgangsöffnung in dem zumindest einen, dem Durchzugstempel abgewandten Werkstück sich konisch in Richtung des, dem Durchzugstempel zugewandten Werkstück verengt. Beim Erzeugen der Durchgangsöffnung in dem zumindest einen, dem Durchzugstempel abgewandten Werkstück bildet die Bruchzone in Kombination mit der Prägezone eine, die Durchgangsöffnung bereichsweise verengende Fase aus, welche beim anschliessenden Durchzug des Materials des, dem Durchzugstempel zugewandten Werkstückes eine teilweise Hinterformung des durchgezogenen Materials schafft. Diese teilweise beziehungsweise bereichsweise Hinterformung reicht bereits für die Übertragung von Lasten auf einem beschränkten Lastniveau aus.

Vorzugsweise wird die Bruchzone als umlaufende Kerbe ausgebildet, was eine einfache Ausbildung eines konisch verlaufenden Randes der Durchgangsöffnung in dem, dem Durchzugsstempel abgewandten Werkstück ermöglicht, die Ausbildung einer definierten Prägezone vereinfacht und zudem die Übertragung von Querlasten verbessert. Vorteilhafterweise wird die Kerbe beim Prägen mit Vertiefungen versehen, so dass bereichsweise grössere Mengen von durchgezogenem Material im Bereich der Kerbe aufgenommen werden können und so der Hinterschnitt bereichsweise erhöht wird. Die Vertiefungen sind vorteilhafterweise in Richtung des, dem Durchzugstempel zugewandten Werkstück ausgerichtet und weisen beispielsweise in der Ansicht eine im Wesentlichen rechteckige Form auf oder sie sind als vertiefte beziehungsweise hervorgehobene Zacken ausgebildet. Alternativ oder in Ergänzung zu den Vertiefungen kann der Rand der Durchgangsöffnung in dem zumindest einen anderen Werkstück auch mit einzelnen Erhebungen versehen sein, zwischen denen ein Anteil von durchgezogenem Material des, dem Durchzugsstempel zugewandten Werkstückes aufgenommen werden kann.

Bevorzugt erfolgt die Prägung mittels einer Ringzacke, was die Erzeugung des definierten Abrissquerschnitts und die gezielte Formgebung der zu erstellenden Vernietung vereinfacht. Vorteilhafterweise weist die Ringzacke eine stufenförmig verlaufende Aussenkontur auf, so dass die Prägezone stufenförmig verlaufend ausgebildet ist. Dadurch wird die Prägezone und somit auch der Rand der Durchgangsöffnung in dem, dem Durchzugsstempel abgewandten Werkstück verfestigt und die Übertragbarkeit von Lasten verbessert.

Vorzugsweise wird das, dem Durchzugsstempel abgewandte Werkstück beim Erzeugen der Durchgangsöffnung von einer Matrize abgestützt. Die Matrize dient als Gegenlager und verhindert, dass sich das, dem Durchzugsstempel abgewandte Werkstück beim Erstellen der Durchgangsöffnung sowie beim Erstellen des Durchzugs wegbiegt.

Bevorzugt wird beim Erstellen des Durchzugs nur abschnittsweise Material des einen, dem Durchzugsstempel zugewandten Werkstückes durch die Durchgangsöffnung des zumindest einen, anderen Werkstückes durchgezogen. Damit weist die längsseitige Vernietung Unterbrechungen auf, was die Schubsteifigkeit verbessert.

Vorzugsweise werden nach dem Erstellen des Durchzugs die freien Enden des durchgezogenen Materials des, dem Durchzugsstempel zugewandten Werkstückes zur Schaffung einer oberflächenbündigen Vernietung rückgeformt. Beim Rückformen wird der verbleibende Bereich zwischen dem konisch verlaufenden Rand der Durchgangsöffnung in dem, dem Durchzugsstempel abgewandten Werkstück und der Aussenkontur des durchgezogenen Materials gefüllt. Weist die Prägezone Vertiefungen auf, so werden diese ebenfalls beim Rückformen der freien Ränder gefüllt, was die Belastbarkeit quer zur erstellten Vernietung wesentlich erhöht. Alternativ können die freien Ränder des durchgezogenen Materials auch nach aussen umgebördelt werden, wobei zu dem Hinterschnitt zudem die Ränder der Durchgangsöffnung in dem, dem Durchzugsstempel abgewandten Werkstück umfasst werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand von Ausführungsbeispielen näher erläutert. Es zeigen:
- Fig. 1: Einen Teilschnitt durch eine erfindungsgemässe Anordnung von zwei plattenförmigen Werkstücken;
- Fig. 2a-d: das erfindungsgemässe Verfahren in vier Einzelschritte;
- Fig. 3a: einen vergrösserten Detailausschnitt im Bereich III in Fig. 2a;
- Fig. 3b: eine Darstellung entsprechend der Fig. 3a einer weiteren Ausführung;
- Fig. 4: eine Ansicht auf eine Prägung gesehen aus der Ebene IV-IV in Fig. 2a;
- Fig. 5: einen vergrösserten Teilschnitt gemäss Linie V-V in Fig. 4;
- Fig. 6: eine Aufsicht auf eine Variante der in Fig. 4 dargestellten Prägung;
- Fig. 7: einen vergrösserten Teilschnitt gemäss Linie VII-VII in Fig. 6;
- Fig. 8: eine Ansicht auf einen erstellten Durchzug gesehen aus der Schnittebene VIII-VIII in Fig. 1.

Grundsätzlich sind in den Figuren gleiche Teile mit den gleichen Bezugszeichen versehen.

### Wege zur Ausführung der Erfindung

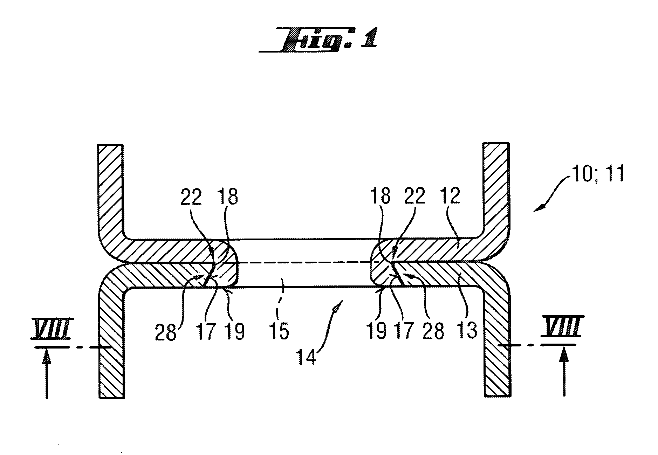

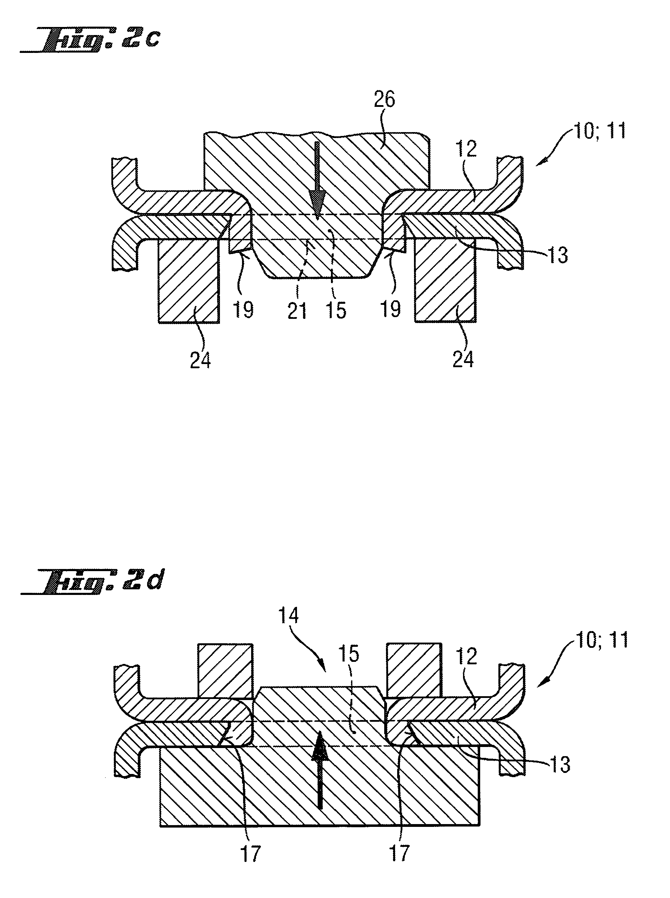

Die zwei plattenförmigen Werkstücke 12, 13 in der, der Fig. 1 dargestellten Anordnung 11 sind als U-förmige Schienen ausgebildet, welche durch einen Durchzug 14 miteinander vernietet sind. Dabei wurde Material des ersten, dem Durchzugstempel 26 (Fig. 2c) zugewandten Werkstückes 12 durch eine Durchgangsöffnung 15 des andern, dem Durchzugstempel 26 abgewandten Werkstückes 13 durchgezogen. Der Rand 17 der Durchgangsöffnung 15 in dem, dem Durchzugstempel 26 abgewandten Werkstück 13 weist eine Bruchzone 22 sowie eine Prägezone 28 auf und verengt sich konisch in Richtung des, dem Durchzugstempel 26 zugewandten Werkstückes 12. Der Rand 17 weist eine, die Durchgangsöffnung 15 verengende Fase 18 auf, die beim Ausbrechen des Materialstücks 20, wie nachfolgend noch dargelegt wird, ausgebildet wird. Das freie Ende 19 des durchgezogenen Materials ist derart rückgeformt, dass eine oberflächenbündige Vernietung ausgebildet ist.

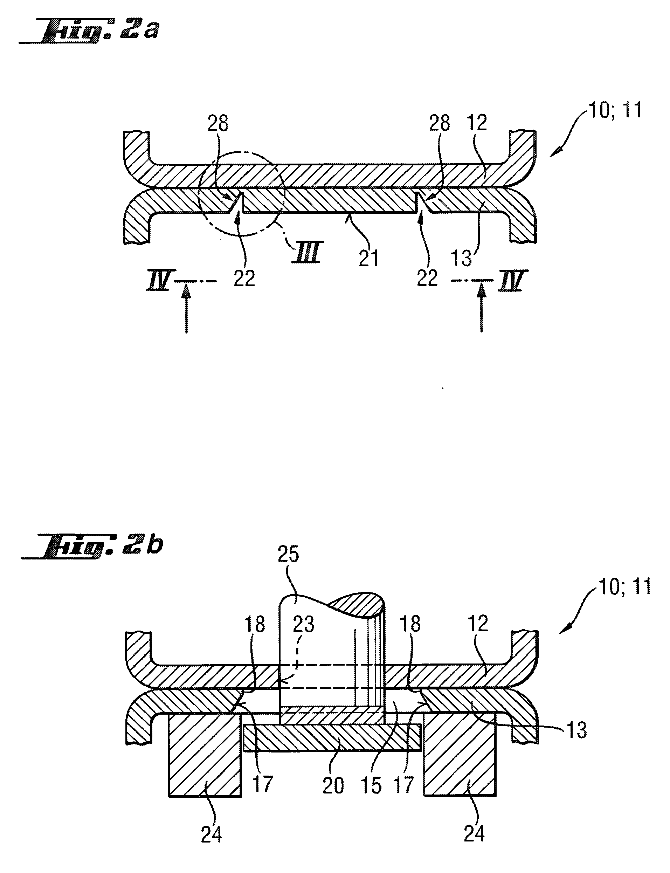

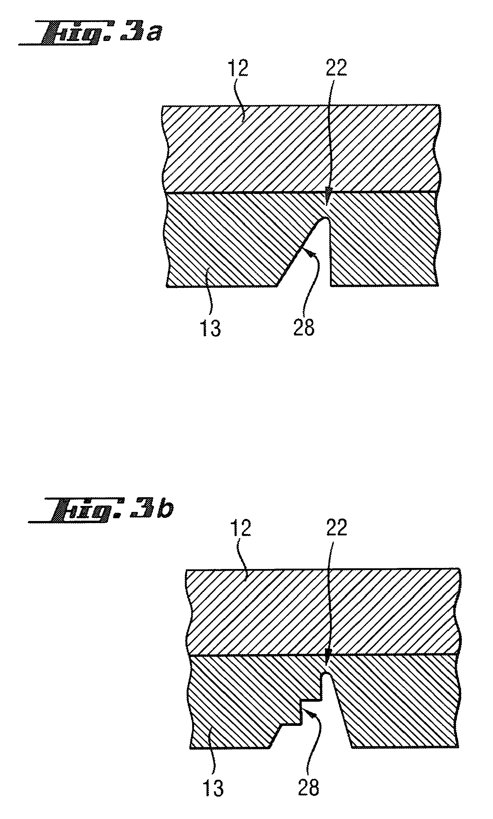

Das erfindungsgemässe Verfahren zum Herstellen des Durchzugs 14 wird nachfolgend anhand der Figuren 2a bis 2d beschrieben. In Fig. 2a ist ein Stapel 10 aus zwei plattenförmigen Werkstücken 12, 13 gezeigt. In einem ersten Schritt wird an der Rückseite 21 des, dem Durchzugstempel 26 abgewandten Werkstückes 13 eine Bruchzone 22 und eine Prägezone 28 mittels einer, hier nicht dargestellten, Ringzacke eingeprägt. Die Ringzacke kann eine stufenförmige Aussenkontur aufweisen, so dass der Rand 17 der Durchgangsöffnung 15 in dem, dem Durchzugstempel 26 abgewandten Werkstück 13 und insbesondere die Prägezone 28 (siehe Fig. 3b) stufenförmig verlaufend ausgebildet ist.

Beim gleichzeitigen Erstellen der Durchgangsöffnung 23 in dem, dem Durchzugstempel 26 zugewandten Werkstück 12 und der Durchgangsöffnung 15 in dem, dem Durchzugstempel 26 abgewandten Werkstück 13 wird, wie in Fig. 2b gezeigt, das, dem Durchzugstempel 26 abgewandte Werkstück 13 von einer Matrize 24 abgestützt, die im Wesentlichen eine Innenkontur aufweist, die der Aussenkontur des zu erstellenden Durchzugs 14 entspricht. Mittels eines als Lochungswerkzeug 25 ausgebildeten Locheisens werden in einer einzigen Zustellbewegung des Lochungswerkzeugs 25 die Durchgangsöffnungen 15, 23 durch den Stapel 10 erzeugt, wobei die Durchgangsöffnung 23 in dem, dem Durchzugstempel 26 zugewandten Werkstück 12 ausgestanzt und das Materialstück 20 zur Schaffung der Durchgangsöffnung 15 in dem, dem Durchzugstempel 26 abgewandten Werkstück 13 ausgebrochen wird. Der Rand 17 der Durchgangsöffnung 15 in dem, dem Durchzugstempel 26 abgewandten Werkstück 13 weist eine konische, sich in Richtung des, dem Durchzugstempel 26 zugewandten Werkstück 12 verengende Ausbildung auf, wobei die Fase 18 ausgebildet wird.

Anschliessend wird, wie in Fig. 2c gezeigt, in einem separaten Verfahrensschritt mittels des Durchzugstempels 26, der im Wesentlichen senkrecht durch den Stapel 10 geführt wird, die kleinere Durchgangsöffnung 23 aufgeweitet und das Material des, dem Durchzugstempel 26 zugewandten Werkstückes 12 durch die Durchgangsöffnung 15 in dem, dem Durchzugstempel 26 abgewandten Werkstück 13 durchgezogen. In diesem Ausführungsbeispiel stehen die freien Ränder 19 des durchgezogenen Materials über die Rückseite 21 des, dem Durchzugstempel 26 abgewandten Werkstückes 13 über.

Wie in Fig. 2d dargestellt, wird das überstehende Material des erstellten Durchzugs 14 rückgeformt, wobei der Freiraum zwischen dem Rand 17 der Durchgangsöffnung 15 und der Aussenkontur des Durchzugs 14 gefüllt und eine oberflächenbündige Vernietung geschaffen wird.

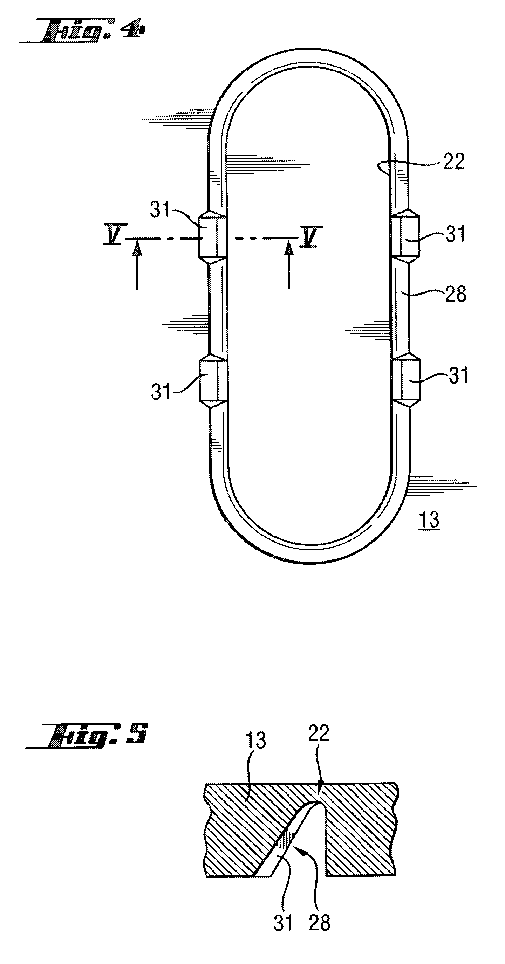

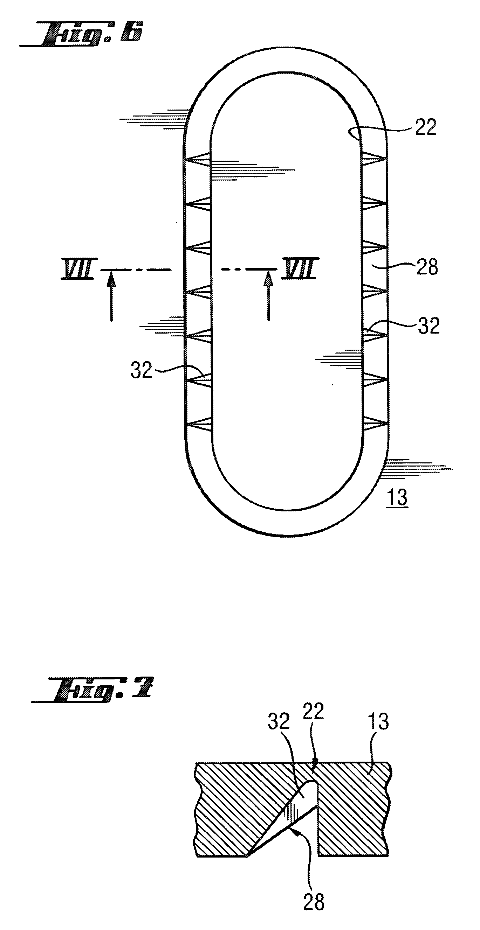

In den Figuren 4 und 5 ist die Bruchzone 22 und die Prägezone 28 gemäss der Fig. 2a dargestellt, welche bereichsweise mit einzelnen, rechteckigen Vertiefungen 31 versehen ist. In den Figuren 6 und 7 sind als Alternative zu den rechteckigen Vertiefungen 31 diese als vorstehende Zacken beziehungsweise als Erhebungen 32 ausgebildet.

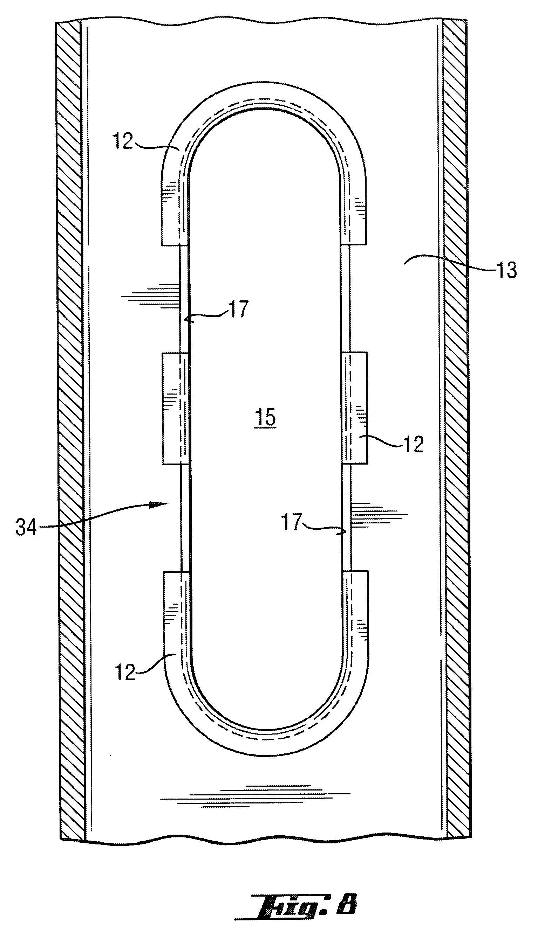

Figur 8 zeigt einen nach dem erfindungsgemässen Verfahren erstellten Durchzug 34, bei dem nur abschnittsweise Material des, dem Durchzugstempel 26 zugewandten Werkstückes 12 durch die Durchgangsöffnung 15 in dem, dem Durchzugstempel 26 abgewandten Werkstück 13 durchgezogen wurde.

## Patentansprüche

1. Anordnung eines Stapels (10) aus zumindest zwei plattenförmigen Werkstücken (12, 13), die durch einen Durchzug (14; 34) miteinander verbunden sind, wobei Material des ersten Werkstückes (12) durch eine Durchgangsöffnung (15) des zumindest einen anderen Werkstückes (13) durchgezogen ist, wobei der Rand (17) der Durchgangsöffnung (15) in dem zumindest einen anderen Werkstück (13) sich konisch in Richtung des ersten Werkstückes (12) verengt, **dadurch gekennzeichnet, dass** der Rand (17) der Durchgangsöffnung (15) in dem zumindest einen anderen Werkstück (13) einzelne Vertiefungen (31) und/oder Erhebungen (32) aufweist.

2. Anordnung nach Anspruch 1, **dadurch gekennzeichnet, dass** der Rand (17) der Durchgangsöffnung (15) in dem zumindest einen anderen Werkstück (13) eine Bruchzone (22) und eine Prägezone (28) aufweist, wobei die Bruchzone (22) optional umlaufend angeordnet ist.

3. Anordnung nach Anspruch 1 oder 2, **dadurch gekennzeichnet, dass** der Rand (17) der Durchgangsöffnung (15) in dem zumindest einen anderen Werkstück (13) stufenförmig verlaufend ausgebildet ist.

4. Verfahren zum Herstellen eines Durchzugs (14; 34), durch einen Stapel (10) aus zumindest zwei plattenförmigen Werkstücken (12, 13),
bei dem mittels eines Lochungswerkzeugs (25) Durchgangsöffnungen (15; 23) durch den Stapel (10) erzeugt werden, wobei die Querschnittsfläche der Durchgangsöffnung (23) in dem, dem Durchzugsstempel (26) zugewandten Werkstück (12) kleiner als die Querschnittsfläche des Durchzugs (14; 34) ist, und die Querschnittsfläche der Durchgangsöffnung (15) in dem, dem Durchzugsstempel (26) abgewandten Werkstück (13) grösser als die Querschnittsfläche des Durchzugs (14; 34) ist, und
bei dem anschliessend mittels eines Durchzugsstempels (26), der senkrecht durch den Stapel (10) geführt wird, Material des einen, dem Durchzugsstempel (26) zugewandten Werkstückes (12) durch die Durchgangsöffnung (15) des zumindest einen, dem Durchzugsstempel (26) abgewandten Werkstückes (13) durchgezogen wird, **dadurch gekennzeichnet, dass**
vor dem Erzeugen der Durchgangsöffnungen (15, 23) in dem, dem Durchzugsstempel (26) abgewandten Werkstück (13) eine Bruchzone (22) eingeprägt wird, und
beim Erzeugen der Durchgangsöffnungen (15, 23) in einer einzigen Zustellbewegung des Lochungswerkzeugs (25) die Durchgangsöffnung (23) in dem, dem Durchzugsstempel (26) zugewandten Werkstück (12) sowie in dem, dem Durchzugsstempel (26) abgewandten Werkstück (13) erstellt wird.

5. Verfahren nach Anspruch 4, **dadurch gekennzeichnet, dass** die Bruchzone (22) als umlaufende Kerbe ausgebildet wird und optional beim Prägen derselben mit Vertiefungen (31) und/oder Erhebungen (32) versehen wird.

6. Verfahren nach Anspruch 4 oder 5, **dadurch gekennzeichnet, dass** die Prägung mittels einer Ringzacke erfolgt, die optional eine stufenförmig verlaufende Aussenkontur aufweist.

7. Verfahren nach einem der Ansprüche 4 bis 6, **dadurch gekennzeichnet, dass** das, dem Durchzugsstempel (26) abgewandte Werkstück (13) beim Erzeugen der Durchgangsöffnungen (15; 23) von einer Matrize (24) abgestützt wird.

8. Verfahren nach einem der Ansprüche 4 bis 7, **dadurch gekennzeichnet, dass** bei dem Erstellen des Durchzugs (34) nur abschnittsweise Material des einen, dem Durchzugsstempel (26) zugewandten Werkstückes (12) durch die Durchgangsöffnung (15) des zumindest einen, dem Durchzugsstempel (26) abgewandten Werkstückes (13) durchgezogen wird.

9. Verfahren nach einem der Ansprüche 4 bis 8, **dadurch gekennzeichnet, dass** die freien Enden (19) des durchgezogenen Materials des, dem Durchzugsstempel (26) zugewandten Werkstückes (13) rückgeformt werden.

## Claims

1. Arrangement of a stack (10) of at least two plate-type workpieces (12, 13) which are interconnected by a rim hole (14; 34), in which material from the first workpiece (12) is forced through a through opening (15) in the at least one other workpiece (13) and the edge (17) of the through opening (15) in the at least one other workpiece (13) narrows conically towards the first workpiece (12), **characterised in that** the edge (17) of the through hole (15) in the at least one other workpiece (13) has separate recesses (31) and/or raised points (32).

2. Arrangement according to claim 1, **characterised in that** the edge (17) of the through opening (15) in the at least one other workpiece (13) has a fracture zone (22) and a stamping zone (28), the fracture zone (22) being optionally arranged circumferentially.

3. Arrangement according to claim 1 or 2, **characterised in that** the edge (17) of the through opening (15) in the at least one other workpiece (13) is formed stepped.

4. Method of manufacturing a rim hole (14; 34) through a stack (10) of at least two plate-type workpieces (12, 13).
In which through openings (15; 23) are formed through the stack (10) by means of a boring tool (25), whereby the cross-sectional area of the through opening (23) in the workpiece (12) facing the rim hole punch (26) is smaller than the cross-sectional area of the rim (14; 34) and the cross-sectional area of the through opening (15) in the workpiece (13) facing away from the rim hole punch (26) is larger than the cross-sectional area of the rim (14; 34), and
in which material from the one workpiece (12) facing the rim hole punch (26) is then forced through the through opening (15) in the at least one workpiece (13) facing away from the rim hole punch (26) by a rim hole punch (26) which is guided vertically through the stack (10), **characterised in that**
before forming the through openings (15, 23) in the workpiece (13) facing away from the rim hole punch (26), a fracture zone (22) is stamped, and
on production of the through openings (15, 23) in a single infeed motion of the boring tool (25), the through opening (23) is formed in the workpiece (12) facing the rim hole punch (26) and in the workpiece (13) facing away from said punch (26).

5. Method according to claim 4, **characterised in that** the fracture zone (22) is in the form of a circumferential notch and when stamped is optionally provided with recesses (31) and/or raised points (32).

6. Method according to claim 4 or 5, **characterised in that** the stamping is carried out by a ring spike which optionally has a stepped outer outline.

7. Method according to one of claims 4 to 6, **characterised in that** the workpiece (13) facing away from the rim hole punch (26) is supported by a die plate (24) during formation of the through openings (15; 23).

8. Method according to one of claims 4 to 7, **characterised in that** during production of the rim (34), material from the one workpiece (12) facing the rim hole punch (26) is only drawn in sections through the through opening (15) of the at least one workpiece (13) facing away from said punch (26).

9. Method according to one of claims 4 to 8, **characterised in that** the free ends (19) of the forced through material of the workpiece (13) facing the rim hole punch (26) are reformed.

## Revendications

1. Agencement d'un empilement (10) composé d'au moins deux pièces en forme de plaques (12, 13) reliées entre elles par l'intermédiaire d'un soyage (14 ; 34), de la matière de la première pièce (12) étant soyée à travers une ouverture débouchante (15) de l'autre pièce au nombre d'au moins une (13), le bord (17) de l'ouverture débouchante (15) dans l'autre pièce au nombre d'au moins une (13) se rétrécissant de manière conique en direction de la première pièce (12), **caractérisé en ce que** le bord (17) de l'ouverture débouchante (15) dans l'autre pièce au nombre d'au moins une (13) comporte des renfoncements (31) et/ou des reliefs (32) isolés.

2. Agencement selon la revendication 1, **caractérisé en ce que** le bord (17) de l'ouverture débouchante (15) dans l'autre pièce au nombre d'au moins une (13) comporte une zone de rupture (22) et une zone d'estampage (28), la zone de rupture (22) étant disposée optionnellement sur le pourtour.

3. Agencement selon la revendication 1 ou 2, **caractérisé en ce que** le bord (17) de l'ouverture débouchante (15) dans l'autre pièce au nombre d'au moins une (13) est conformé de manière étagée.

4. Procédé de fabrication d'un soyage (14 ; 34) à travers un empilement (10) composé d'au moins deux pièces en forme de plaques (12, 13), procédé dans lequel des ouvertures débouchantes (15 ; 23) sont réalisées à travers l'empilement (10) au moyen d'un outil de perçage (25), la section transversale de l'ouverture débouchante (23) dans la pièce (12) tournée vers le poinçon de soyage (26) étant inférieure à la section transversale du soyage (14 ; 34), et la section transversale de l'ouverture débouchante (15) dans la pièce (13) située à l'opposé du poinçon de soyage (26) étant supérieure à la section transversale du soyage (14 ; 34), et dans lequel, au moyen d'un poinçon de soyage (16) engagé perpendiculairement à travers l'empilement (10), de la matière de la pièce (12) tournée vers le poinçon de soyage (26) est ensuite soyée à travers l'ouverture débouchante (15) de la pièce au nombre d'au moins une (13) située à l'opposé du poinçon de soyage, **caractérisé en ce que**, avant de réaliser les ouvertures débouchantes (15, 23), une zone de rupture (22) est réalisée par estampage dans la pièce (13) située à l'opposé du poinçon de soyage (26) et, lors de la réalisation des ouvertures débouchantes (15, 23), l'ouverture débouchante (23) est réalisée en un seul mouvement d'avance de l'outil de perçage (25) dans la pièce (12) tournée vers le poinçon de soyage (26) ainsi que dans la pièce (13) située à l'opposé du poinçon de soyage (26).

5. Procédé selon la revendication 4, **caractérisé en ce que** la zone de rupture (22) est conformée en entaille périphérique et, lors de la réalisation de celle-ci par estampage, est optionnellement pourvue de renfoncements (31) et/ou de reliefs (32).

6. Procédé selon la revendication 4 ou 5, **caractérisé en ce que** l'estampage s'effectue au moyen d'un anneau d'empreinte qui, optionnellement, présente un contour extérieur étagé.

7. Procédé selon une des revendications 4 à 6, **caractérisé en ce que**, lors de la réalisation des ouvertures débouchantes (15 ; 23), la pièce (13) située à l'opposé du poinçon de soyage (26) est soutenue par une matrice (24).

8. Procédé selon une des revendications 4 à 7, **caractérisé en ce que**, lors de la réalisation du soyage (34), la matière de la pièce (12) tournée vers le poinçon de soyage (26) n'est soyée que par endroits à travers l'ouverture débouchante (15) de la pièce au nombre d'au moins une (13) située à l'opposé du poinçon de soyage (26).

9. Procédé selon une des revendications 4 à 8, **caractérisé en ce que** les extrémités libres (19) de la matière soyée de la pièce (13) tournée vers le poinçon de soyage (26) sont ramenées vers l'arrière.
